# EUROPÄISCHE PATENTSCHRIFT

(11) **EP 1 132 524 B1**
(45) Veröffentlichungstag und Bekanntmachung des Hinweises auf die Patenterteilung: **21.05.2003**
(21) Anmeldenummer: 01103214.1
(22) Anmeldetag: 12.02.2001
(51) Int. Cl.: E02B 8/08, E02B 1/00

(54) **Transportvorrichtung für flussabwärts wandernde Fische**
Transport device for downstream migrating fish
Dispositif de transport pour poissons descandant un cours d'eau

(30) Priorität: 11.02.2000 DE 10006173
(43) Veröffentlichungstag der Anmeldung: 12.09.2001
(73) Patentinhaber: Adam, Beate Dr., 36326 Antrifttal (DE); Dumont, Ulrich Dipl.-Ing., 52134 Herzogenrath (DE); Kessels, Norbert, 52477 Alsdorf (DE); Schwevers, Ulrich Dr., 36326 Antrifttal (DE)
(72) Erfinder: Adam, Beate Dr., 36326 Antrifttal (DE); Dumont, Ulrich Dipl.-Ing., 52134 Herzogenrath (DE); Kessels, Norbert, 52477 Alsdorf (DE); Schwevers, Ulrich Dr., 36326 Antrifttal (DE)
(74) Vertreter: Bauer, Dirk, Dipl.-Ing. Dipl.-Kfm.

(56) Entgegenhaltungen:
- DE-U- 29 703 497
- FR-A- 2 736 949
- US-A- 4 260 286
- US-A- 4 437 431
- US-A- 5 660 499

## Beschreibung

Die Erfindung betrifft eine Transportvorrichtung für flußabwärts wandernde Fische, die in Fließrichtung vor einem den Querschnitt eines Fließgewässers versperrenden Wasserbauwerk, das eine Durchleitungseinrichtung für einen das Wasserbauwerk passierenden Volumenstrom besitzt, angeordnet ist und einen von Wasser durchströmbaren Kanal mit mindestens einer Eintrittsöffnung aufweist, die sich innerhalb eines Oberwassers befindet, wobei eine Austrittsöffnung des Kanals außerhalb des Oberwassers angeordnet ist.

Wasserkraftwerke gelten gemeinhin als ökologisch verträgliche Form der Energiegewinnung, insbesondere der Stromerzeugung, da hiermit regenerative Energiequellen genutzt werden und keine CO₂-Emissionen auftreten. Allerdings stehen diesem Umstand nicht unerhebliche gewässerökologische Beeinträchtigungen entgegen, da die von Wasserkraftwerken verursachte Unterbrechung der Wanderwege insbesondere von sogenannten diadromen Wanderfischen zu einem teilweise nachhaltigen Rückgang der Fischbestände bis hin zum Aussterben ganzer Populationen geführt hat. So sind beispielsweise die alljährlich vor allem in den Herbst- und Wintermonaten abwandernden katadromen Wanderfische, beispielsweise europäische Aale (Anguilla anguilla), essentiell darauf angewiesen, von ihren Nahrungsbiotopen in Flüssen des Binnenlandes an die Laichplätze im Meer zu wandern. Aufgrund ihrer Körperform und -länge sind sie beim Passieren der Turbinen von Wasserkraftwerken besonders gefährdet. Auch Wiederansiedlungsprogramme für Lachse sind vermutlich nur dann erfolgreich, wenn ihr Abstieg ins Meer gesichert werden kann.

Während der Stand der Technik bei Fischaufstiegsanlagen in der Vergangenheit wesentlich weiterentwickelt werden konnte, ist das Problem der flußabwärts gerichteten Wanderung von Fischen bisher nicht zufriedenstellend gelöst. Obwohl es seit mehr als 100 Jahren bekannt ist, daß durch die Turbinen bzw. Rechenanlagen von Wasserkraftwerken Fische in beträchtlichem Umfange geschädigt oder getötet werden, existieren bis heute lediglich extrem aufwendige Anlagen, die das Eindringen von Fischen in die Kraftwerke bzw. deren Beschädigung an vorgeschalteten Rechenanlagen wirksam verhindern sollen. Die meisten dieser Anlagen wurden für abwandernde Lachse entwickelt, deren Verhalten vergleichsweise gut untersucht ist. Aufgrund ihrer langgestreckten Körperform treten aber insbesondere bei Aalen erhebliche Schäden bei der Passage durch Wasserkraftanlagen auf. Verschiedentlich eingebaute Schutzvorrichtungen, wie beispielsweise Elektroscheuchanlagen, Quecksilberdampflampen, Stroboskoplicht usw., haben sich bei Überprüfungen jeweils als nicht funktionsfähig erwiesen. Beim Einbau von Einlaufrechen mit einem Stababstand von 20 mm wurde das Problem der Fischschädigung lediglich von der Turbine in den Rechen vorverlagert, was u.a. daran liegt, daß alternative Abwanderungswege für Fische nicht zur Verfügung stehen oder von diesen nicht aufgefunden werden konnten.

Aus der DE 297 03 496 U 1 ist eine gattungsbildende Vorrichtung bekannt, mit der Fischen im Bereich einer Wasserturbine das Überqueren eines Wasserstauwerks ermöglicht werden soll. Auf der Gewässerstauseite ist vor der Turbine ein schräg zur Strömungsrichtung verlaufendes und aus zwei keilförmig zueinander angeordneten Flächenabschnitten gebildetes Gitter angebracht, dessen Gitterstäbe diagonal verlaufen. Das Gitter verdeckt den Querschnitt einer Durchleitungseinrichtung, die beispielsweise einer Turbine den benötigten Volumenstrom zuführt. Die Durchleitungseinrichtung besitzt einen Auslauf im Unterwasser, aus dem der durchgeleitete Volumenstrom austritt. In der Regel besitzt die Durchleitungseinrichtung lediglich eine Breite, die einem Bruchteil der Breite des gesamten Wasserbauwerks, d.h. der Breite des Fließgewässers, entspricht. Durch die schrägverlaufenden Stäbe im Gitter soll es insbesondere Aalen ermöglicht werden, sich an den Stäben entlang zu schlängeln und in einen Bereich seitlich neben dem Gitter unmittelbar an der Staumauer zu gelangen. In diesem Bereich ist ein parallel zu der Staumauer schräg nach oben verlaufendes Rohr angeordnet, das über die Mauerkrone hinweg und auf der gegenüberliegenden Seite bis in das Wasser auf der Gewässerablaufseite hineingeführt ist. Die Rohrleitung ist vollständig mit Wasser gefüllt und wird von diesem stetig durchströmt. Aufgrund des somit entstehenden Soges in Richtung des oder der Einläufe in dem Rohr bzw. Schacht werden die Fische entlang des Gitters bis in den Schacht geleitet, wo sie aufgrund der darin herrschenden Strömung auf die andere Seite der Mauer transportiert werden.

Es hat sich jedoch herausgestellt, daß die Quote der Fische, die durch die Rohrleitung auf die andere Seite der Mauer gelangen können, in bezug auf die Gesamtzahl der auf das Hindernis auftreffenden Fische sehr gering ist. Insbesondere bei niedrigen Strömungsgeschwindigkeiten im Bereich des Gitters vor der Turbine kommt es nämlich bei den Fischen infolge einer Kollision mit dem Hindernis zu einer streßbedingten Fluchtreaktion, so daß die Fische den Einlaufbereich der Rohrleitung nicht erreichen.

Aus der DE 297 03 497 U1 ist ebenfalls eine Einrichtung bekannt, die Fischen das Passieren von Wasserstauwerken ermöglichen soll. Die in einer ähnlichen Weise wie bei der Einrichtung gemäß der DE 297 03 496 U1 konstruierte und die Staumauer überbrückende Rohrleitung weist an ihrem im Oberwasser befindlichen Ende eine trichterförmige Einlauföffnung im Bereich des Flußgrundes auf. Die vollständig mit Wasser gefüllte Rohrleitung wird aufgrund der Höhendifferenz zwischen dem Ober- und Unterwasser kontinuierlich durchströmt, wobei die Durchflußmenge und -geschwindigkeit mit Hilfe von Schiebern regulierbar ist. Der Querschnitt der Rohrleitung ist zweigeteilt mit einem oberen, im wesentlichen freien Querschnitt, in dem sich Fische bewegen können, die freie Gewässer bevorzugen, während in einem unteren, durch Stege, Stifte oder Steinbrocken verengten Querschnittsbereich sich solche Fische fortbewegen sollen, die einen Bereich in der Nähe des Gewässergrundes bevorzugen.

Problematisch ist auch bei dieser bekannten Vorrichtung der geringe Prozentsatz der Fische, denen es gelingt, die Rohrleitung zu finden und mit deren Hilfe das Staubauwerk zu überwinden.

Aus der FR2 736 949 A ist ebenfalls eine Transportvorrichtung für wandernde Fische bekannt. Dieses Dokument offenbart die säintlichen technischen Merkmale im oberbegriff des unabhängigen Anspruchs 1, insbesondere eine Durchleifungs vorrichtung für ein Wasserbauwerk, wobei die Eingangsströmung entgegengesetzt zur Fließrichtung des Gewässers verläuft.

Der Erfindung liegt die Aufgabe zugrunde, eine Vorrichtung vorzuschlagen, die es auf zuverlässige Weise ermöglicht, die Fische, die auf ein den Fließquerschnitt versperrendes Hindernis stoßen, zunächst einzufangen, um diese separierten Fische in einem nächsten Schritt aus dem Oberwasser heraus zu transportieren.

Ausgehend von einer Transportvorrichtung der eingangs beschriebenen Art wird diese Aufgabe erfindungsgemäß durch eine Transportvorrichtung für flußabwärts wandernde Fische gemäß Anspruch 1 gelöst.

Laborversuche haben ergeben, daß insbesondere Aale beim Auftreffen auf ein Hindernis ein ganz spezifisches Verhalten zeigen. Aufgrund ihrer offensichtlich eingeschränkten optischen Wahrnehmungsfähigkeit stoßen sie stromabwärts schwimmend fast ausnahmslos mit dem Kopf voran gegen ein Hindernis. In Abhängigkeit von der herrschenden Fließgeschwindigkeit versuchen die Aale mehr oder weniger schnell, sich von dem Hindernis zu lösen, indem sie nach der Kollision eine 180°-Kehre am Hindernis durchführen. Dabei bemühen sie sich immer, mit der Kehre in Richtung der Gewässersohle zu entkommen. Die Fluchtbewegung erfolgt dann sohlennah entgegen der Fließrichtung. Suchbewegungen seitlich entlang des Hindernisses sind bei Aalen nicht festzustellen.

Diese naturbedingte Verhaltensweise der Aale macht sich die erfindungsgemäße Transportvorrichtung zunutze, da die Einlaßöffnung in den Kanal sohlennah angeordnet und entgegen der Fließrichtung ausgerichtet ist, so daß von dem Hindernis entgegen der Strömung sich weg bewegende Aale durch die Einlaßöffnung hindurch schwimmen können. Der Abstand der Einlaßöffnung von dem Hindernis beträgt - in Abhängigkeit von den örtlichen Gegebenheiten sowie der Strömungsgeschwindigkeit - 1 m bis 100 m, vorzugsweise ca. 5 m bis 10 m. Da aktive Suchbewegungen seitlich entlang von Hindernissen speziell bei Aalen nicht festzustellen sind, kommt der Einleitung der Fische in einen Fangbehälter eine besondere Bedeutung zu, denn beispielsweise seitlich neben dem Hindernis angeordnete Bypasskanäle können von den Fischen in der Regel nicht gefunden werden. Sind die Fische erst einmal durch die Einlaßöffnung in den Kanal eingedrungen und aus dem Oberwasser herausgeführt, so ist ein kontinuierlich oder periodisch stattfindender Transport derselben in das Unterwasser durchzuführen, um auf diese Weise eine Fortsetzung ihrer Wanderung zu ermöglichen.

Die Erfassung einer möglichst hohen Quote von Fischen mit Hilfe der Transportvorrichtung nach der Erfindung wird begünstigt, da die Breite der Eintrittsöffnung im wesentlichen der Breite einer Durchleitungseinrichtung entspricht. Die Durchleitungseinrichtung besitzt in der Regel nur einen Bruchteil der Breite des gesamten Fließgewässers, da die Durchleitung gezielt beispielsweise zu einer Turbine erfolgen soll.

Eine Weiterbildung der Erfindung besteht darin, daß die Einlaßöffnung trichterförmig ausgebildet ist und ihr kleinster Durchmesser oder ihre kleinste Höhe nur geringfügig größer als das größte Durchmessermaß der zu sammelnden Fische ist. Während die Trichterform das Auffinden der Einlaßöffnung begünstigt, verhindert die im Längsschnitt reusenartig verengte Einlaßöffnung auf einfache Weise, daß die einmal durch die Öffnung hindurch in das Innere des Kanals gelangten Fische diesen wieder verlassen können.

Gemäß einer besonderen Ausgestaltung der Erfindung mündet die Austrittsöffnung des Kanals in einen Sammelbehälter, dessen Wasserspiegel sich oberhalb des Wasserspiegels des Unterwassers und unterhalb des Wasserspiegels des Oberwassers befindet.

Aufgrund des hydrostatischen Druckunterschiedes zwischen den Drücken im Bereich der Eintrittsöffnung und der Austrittsöffnung ist bei einer derartigen Ausgestaltung eine Durchströmung des Kanals möglich, ohne daß eine externe Energiequelle erforderlich ist. Von dem Sammelbehälter aus können die Fische durch eine Öffnung auf einfache Weise in das Unterwasser abgelassen werden, wobei auch hierfür kein gesonderter Energieeinsatz erforderlich ist.

Alternativ hierzu kann sich der Wasserspiegel des Sammelbehälters aber auch oberhalb des Wasserspiegels des Oberwassers befinden. In diesem Fall ist der Einsatz einer Pumpeinrichtung erforderlich. Es besteht dabei jedoch jegliche Freiheit bei der Anordnung des Sammelbehälters, da dieser auch an beliebiger Stelle vor dem Wasserbauwerk - in Strömungsrichtung betrachtet - plaziert werden kann. Von einem derart positionierten Sammelbehälter aus können die Fische nach einem Zwischenaufenthalt ohne weiteren Energieeinsatz in das Unterwasser entlassen werden, wobei auch eine baulich leicht zu realisierende Kanalführung oberhalb der Krone des Wasserbauwerks möglich ist.

Unabhängig davon, ob der Kanal direkt von dem Oberwasser in das Unterwasser geführt ist oder zunächst in einen Sammelbehälter mündet, von dem aus die Fische in das Unterwasser entlassen werden, ist es möglich, daß der Kanal das Wasserbauwerk überbrückt oder - wo baulich möglich - durchdringt oder seitlich an diesem vorbeigeführt ist.

Vorzugsweise ist der Innendurchmesser des Kanals deutlich größer als das größte Durchmessermaß der zu sammelnden Fische, wobei ein Verhältnis von Kanaldurchmesser zu Fischdurchmesser von mindestens 5 bis 10 anzustreben ist.

Mit Hilfe eines Schiebers oder ähnlicher Mittel zur Querschnittsregulierung läßt sich die Strömungsgeschwindigkeit und damit auch der Volumenstrom in dem Kanal einstellen. Die stetige Durchströmung der Transportvorrichtung und somit auch des Kanals macht einen Verzicht auf einen besonderen Verschlußmechanismus an der Einlaßöffnung möglich, da die durch die Einlaßöffnung in den Kanal gelangenden Fische aufgrund dessen Durchströmung automatisch aus dem Oberwasser herausgespült werden.

Um nach der Installation eines derartigen Kanals eine Durchströmung zu erzielen, ist an seiner höchsten Stelle eine Entlüftungsöffnung vorgesehen, an die eine Pumpe anschließbar ist, um in dem Kanal vorhandene Luft zu entfernen.

Alternativ zu einer stetig von Wasser durchflossenen Leitung können die in den Kanal eingedrungenen Fische auch mittels einer die Fische nicht verletzenden Pumpeinrichtung in das Unterwasser transportiert werden. Die Pumpeinrichtung kann kontinuierlich oder inmittierend betrieben werden.

Um statistische Daten über das Wanderverhalten von Fischen sammeln zu können, kann eine Einrichtung (beispielsweise an jeder Einlaßöffnung oder der Austrittsöffnung des Kanals) vorgesehen werden, mit der die Anzahl der eintretenden und/oder die Anzahl der diesen verlassenden und/oder der in einem Sammelbehälter befindlichen Fische erfaßbar ist.

Die Erfindung wird nachfolgend anhand eines Ausführungsbeispiels einer Transportvorrichtung, die in der Zeichnung dargestellt ist, näher erläutert. Es zeigt:
- Fig. I: eine Transportvorrichtung mit einem durch eine Staumauer verlaufenden Kanal;
- Fig. 2: einen Längsschnitt durch eine trichterförmige Einlaßöffnung der Transportvorrichtung gemäß Fig. 1;
- Fig. 3: wie Fig. 1, jedoch mit einem über die Staumauer verlaufenden Kanal, und
- Fig. 4: eine Draufsicht auf die trichterförmige Einlaßöffnung der Transportvorrichtung gemäß Fig. 3.

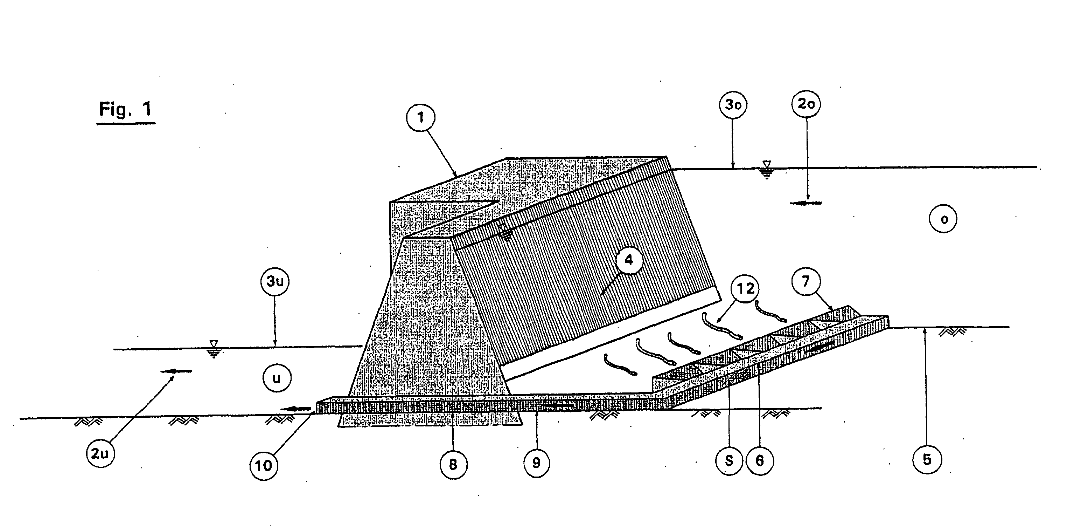

Fig. 1 zeigt in perspektivischer Ansicht ein den Strömungsquerschnitt eines Fließgewässers versperrendes Wasserbauwerk 1, beispielsweise in Form einer Wasserkraftanlage mit Einlaufrechen eines Wehres, einer Staumauer, eines Damms o.ä. Die Fließrichtung des Wassers wird durch die Pfeile 2o und 2u veranschaulicht. Oberhalb des Bauwerks 1 bildet sich im stationären Betrieb ein Wasserspiegel 3o des sogenannten Oberwassers O und unterhalb des Bauwerks 1 ein Wasserspiegel 3u des sogenannten Unterwassers U aus. Der weitaus größte Teil des das Wasserbauwerk 1 passierenden Volumenstroms tritt durch eine als Einlaufgitter 4 ausgebildete Durchleitungseinrichtung hindurch und gelangt von dort aus über eine nicht dargestellte Turbine in das Unterwasser U. Von dem gesamten Wasserbauwerk 1 ist im wesentlichen lediglich der Bereich gezeigt, in dem die Durchleitungseinrichtung angeordnet ist. Neben dieser erstreckt sich eine mauer- oder dammartige Sperreinrichtung, deren Länge die der Durchleitungseinrichtung deutlich übersteigen kann. Die Länge der Sperreinrichtung und die Breite der Durchleitungseinrichtung ergeben in der Summe die Gesamtbreite des Fließgewässers.

Ein Durchschwimmen des Einlaufgitters 4 und der nachfolgenden Turbine ist für Aale aufgrund ihrer Physiognomie mit einem hohen Verletzungsrisiko - einschließlich Verletzungen mit Todesfolge - verbunden. In einem Abstand von ca. 5-10 m vor dem Fuß des Wasserbauwerks 1 im Bereich der Durchleitungseinrichtung befindet sich eine Transportvorrichtung 6, die eine Mehrzahl von unmittelbar auf der Sohle 5 des Fließgewässers angeordneten und sich trichterförmig verjüngenden Einlaßöffnungen 7 sowie einen langgestreckten und parallel zu dem Wasserbauwerk 1 verlaufenden Sammelabschnitt S eines Kanals 9 aufweist. Stirnseitig ist an den Sammelabschnitt S ein Abschnitt 8 angeschlossen, der sich von dem Oberwasser O durch das Wasserbauwerk 1 hindurch bis in das Unterwasser U erstreckt. Die Einlaßöffnungen 7 sind sämtlich dem Wasserbauwerk 1 zugewandt. Aufgrund des Unterschiedes zwischen den hydrostatischen Drücken im Oberwasser O im Bereich der Einlaßöffnungen 7 und im Unterwasser U im Bereich einer Auslaßöffnung 10 des Kanals 9 wird sowohl der Sammelabschnitt S als auch der Abschnitt 8 stetig von Wasser durchströmt.

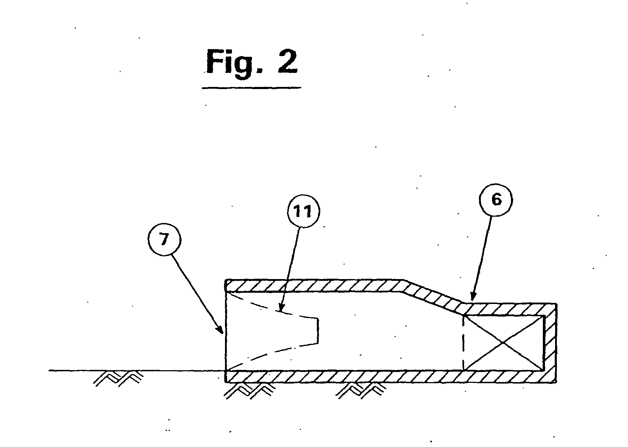

Fig. 2 zeigt einen Längsschnitt durch die Transportvorrichtung 6 im Bereich einer Einlaßöffnung 7. In der Einlaßöffnung 7 befindet sich ein reusenartiger Einsatz 11 aus einem Netz bzw. Gittermaterial, der zwar ein Eindringen der Fische in die Transportvorrichtung 6, d.h. insbesondere in den Sammelabschnitt S des Kanals 9, erlaubt, nicht jedoch ein entgegengesetztes Verlassen der Transportvorrichtung 6.

Stromabwärts wandernde Fische, insbesondere Aale 12, führen nach einem Auftreffen auf ein Hindernis in Form des Wasserbauwerks 1 eine 180°-Kehre aus und bewegen sich fluchtartig sowohl in Richtung der Sohle 5 des Fließgewässers als auch entgegen dessen Strömungsrichtung. Dabei dringen sie durch die Einlaßöffnung 7 in den Sammelabschnitt S ein, um von der darin herrschenden Strömung durch den Abschnitt 8 in das Unterwasser U gespült zu werden. Der von dem Abschnitt 8 gebildete Bypass würde - sofern er lediglich im Fußbereich des Wasserbauwerks 1 einen sich stromaufwärts öffnenden Eintrittsquerschnitt in der Größe des Kanalquerschnitts besäße - von den stromabwärts wandernden Aalen 12 kaum gefunden werden, da diese seitliche Ausweichbewegungen nicht ausführen. Aufgrund der festgestellten sohlennahen Fluchtbewegung der Aale 12 läßt sich ein in seiner Höhe begrenzter Einlaßquerschnitt bei der Transportvorrichtung 6 realisieren, wobei die Einlaßöffnungen 7 jedoch unbedingt entgegen der Strömungsrichtung 2o orientiert sein müssen, um die sohlennahe Schwimmphase der flüchtenden Aale 12 auszunutzen.

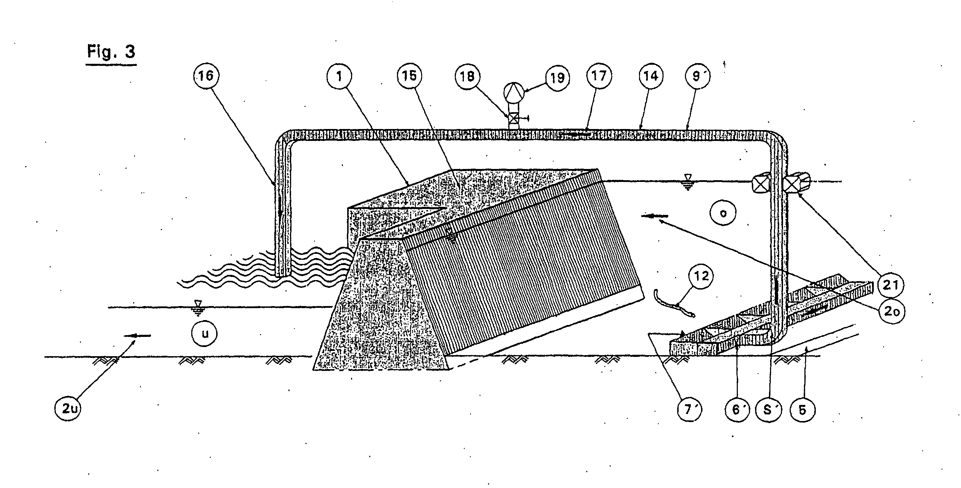

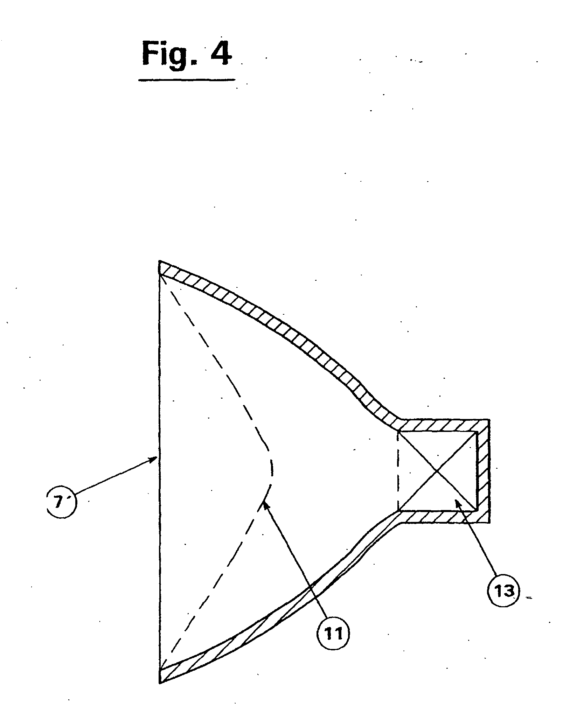

Die in den Fig. 3 und 4 dargestellte Transportvorrichtung 6' weist wie die Vorrichtung gemäß Fig. 1 eine Mehrzahl von Einlaßöffnungen 7' auf, die - wie sich aus der Schnittdarstellung nach Fig. 4 ergibt - wiederum trichterförmig ausgebildet und mit einem reusenartigen Einsatz 11 versehen sind. Die Breite der Einlaßöffnungen 7'entspricht in der Summe im wesentlichen der Breite der Durchleitungseinrichtung, d.h. des Einlaufgitters 4.

Der Sammelabschnitt S' des Kanals 9' bei dieser Ausführungsform geht in einen senkrecht aus dem Oberwasser O aufsteigenden Abschnitt 13 des rohrförmigen Kanals 9' über. Dieser weist einen zweiten, horizontal verlaufenden Abschnitt 14 auf, der oberhalb der Krone 15 des Wasserbauwerks 1 verläuft. Den Abschluß der Transporteinrichtung 6' bildet ein senkrecht nach unten verlaufender Abschnitt 16, dessen Auslauf innerhalb des Unterwassers U angeordnet ist.

Damit sich in der Transporteinrichtung 6' eine durch den Niveauunterschied zwischen den Spiegeln des Oberwassers O und des Unterwassers U verursachte Strömung in Richtung des Pfeils 17 einstellt, ist in dem oberen horizontalen Abschnitt 14 ein Entlüftungsventil 18 angeschlossen, das mit einer Pumpe 19 in Verbindung steht, mit deren Hilfe eventuell vorhandene Luft aus der Leitung entfernbar ist. Sobald die Leitung vollständig mit Wasser gefüllt ist, stellt sich eine Durchströmung vom Oberwasser O in Richtung des Unterwassers U ein.

Zur Stabilisierung der Transporteinrichtung 6' ist der Kanal 9' im oberen Bereich des vertikalen Abschnitts 13 an einem auf dem Oberwasser O schwimmenden Ponton 21 befestigt.

## Patentansprüche

1. Transportvorrichtung (6, 6') für flußabwärts wandernde Fische, die in Fließrichtung vor einem den Querschnitt eines Fließgewässers versperrenden Wasserbauwerk (1), das eine Durchleitungseinrichtung für einen das Wasserbauwerk (1) passierenden Volumenstrom besitzt, angeordnet ist und einen von Wasser durchströmbaren Kanal (9, 9') mit mindestens einer Eintrittsöffnung (7, 7') aufweist, die sich innerhalb eines Oberwassers (O) befindet und so angeordnet ist, daß die eintretende Strömung entgegen der Fließrichtung (20) des das wasserbauwerk (1) passierenden Volumenstroms verläuft, wobei eine Austrittsöffnung des Kanals (9, 9') außerhalb des Oberwassers (O) angeordnet ist, **dadurch gekennzeichnet, daß** die Eintrittsöffnung (7, 7') des Kanals (9,9'),in der Nähe der Sohle (5) des Fließgewässers und quer zu dessen Fließrichtung (20) im wesentlichen über die gesamte Breite der Durchleitungseinrichtung angeordnet ist,

2. Transportvorrichtung nach Anspruch 1, **dadurch gekennzeichnet, daß** die Einlaßöffnung (7, 7') trichterförmig ausgebildet ist und ihr kleinster Durchmesser oder ihre kleinste Höhe nur geringfügig größer ist als das größte Durchmessermaß der zu sammelnden Fische.

3. Transportvorrichtung nach Anspruch 1 oder 2, **dadurch gekennzeichnet, daß** die Austrittsöffnung des Kanals (9,9') in einen Sammelbehälter mündet, dessen Wasserspiegel sich oberhalb des Wasserspiegels des Unterwassers(U)/und (4) unterhalb des Wasserspiegels des Oberwassers (O) befindet.

4. Transportvorrichtung nach Anspruch 3, **dadurch gekennzeichnet, daß** der Wasserspiegel des Sammelbehälters sich oberhalb des Wasserspiegels des Oberwassers (O) befindet.

5. Transportvorrichtung nach einem der Ansprüche 1 bis 4, **dadurch gekennzeichnet, daß** der Kanal (9,9') das Wasserbauwerk (1) überbrückt oder durchdringt oder seitlich an diesem vorbeigeführt ist.

6. Transportvorrichtung nach Anspruch 5, **dadurch gekennzeichnet, daß** der Innendurchmesser des Kanals (9, 9') deutlich größer als das größte Durchmessermaß der zu sammelnden Fische ist.

7. Transportvorrichtung nach Anspruch 1 bis 6, **dadurch gekennzeichnet, daß** eine Leitung (8) an ihrer höchsten Stelle mit einer Entlüftungsöffnung (18) versehen ist, an die eine Pumpe (19) anschließbar ist.

8. Transportvorrichtung nach einem der Ansprüche 1 bis 7, **dadurch gekennzeichnet, daß** die in den Kanal (9,9') eingedrungenen Fische mittels einer die Fische nicht verletzenden Pumpeinrichtung in das Unterwasser (U) transportierbar sind.

9. Transportvorrichtung nach einem der Ansprüche 1 bis 8, **gekennzeichnet durch** eine Zähleinrichtung, mit der die Anzahl der in den Kanal (9,9') eintretenden und/oder aus dem Kanal (9,9') austretenden und/oder in dem Sammelbehälter befindlichen Fische erfaßbar ist.

## Claims

1. A transport device (6, 6') for fish which are migrating downstream, which is disposed in the direction of flow in front of a hydraulic construction (1) which obstructs the cross-section of a flowing body of water and which has a lead-through device for a volume flow which passes through the hydraulic construction (1), which transport device comprises a channel (9, 9') through which water can flow having at least one inlet opening (7, 7') which is situated within the upstream water (O) and which is disposed so that the entering flow runs in the direction opposite to the direction of flow (2o) of the volume flow passing through the hydraulic construction (1), wherein an outlet opening of the channel (9, 9') is disposed outside the upstream water (O), **characterised in that** the inlet opening (7, 7') of the channel (9, 9) in the vicinity of the bottom (5) of the flowing body of water and transverse to the direction of flow (20) thereof is disposed substantially over the entire width of the lead-through device.

2. A transport device according to claim 1, **characterised in that** the inlet opening (7, 7') is of funnel-shaped construction and its smallest diameter or its lowest height is only slightly greater than the largest diameter dimension of the fish to be collected.

3. A transport device according to claim 1 or 2, **characterised in that** the outlet opening of the channel (9, 9') leads into a collecting vessel, the water level of which is situated above the water level of the downstream water (U) and below the water level of the upstream water (O).

4. A transport device according to claim 3, **characterised in that** the water level of the collecting vessel is situated above the water level of the upstream water (O).

5. A transport device according to any one of claims 1 to 4, **characterised in that** the channel (9, 9') bridges the hydraulic construction (1) or penetrates the latter or is led past the latter at the side.

6. A transport device according to claim 5, **characterised in that** the inside diameter of the channel (9, 9') is considerably larger than the largest diameter dimension of the fish to be collected.

7. A transport device according to claims 1 to 6, **characterised in that** a line (8) is provided at its highest point with a deaeration opening (18) to which a pump (19) can be connected.

8. A transport device according to any one of claims 1 to 7, **characterised in that** the fish which enter the channel (9, 9') can be transported into the downstream water (U) by means of a pumping device which does not harm the fish.

9. A transport device according to any one of claims 1 to 8, **characterised by** a counting device by which the number of fish which enter the channel (9, 9') and/or which emerge from the channel (9, 9') and/or which are situated in the collecting vessel can be determined.

## Revendications

1. Dispositif (6, 6') de transport de poissons descendant un cours d'eau, qui est monté en amont dans la direction d'écoulement d'un ouvrage (1) sur l'eau qui obstrue la section transversale d'un cours d'eau et qui a un dispositif de passage d'un courant en volume passant dans l'ouvrage (1) sur l'eau et un canal (9, 9') dans lequel peut passer de l'eau et qui a au moins une ouverture (7, 7'), d'entrée qui se trouve au sein d'une eau (O) amont, **caractérisé en ce que** l'ouverture (7, 7') d'entrée du canal (9, 9') est disposée à proximité du fond (5) du cours d'eau et transversalement à sa direction (20) d'écoulement sensiblement sur toute la largeur du dispositif de passage.

2. Dispositif de transport suivant la revendication 1, **caractérisé en ce que** l'ouverture (7, 7') d'entrée est constituée en forme d'entonnoir et son diamètre le plus petit ou sa hauteur la plus petite n'est que légèrement plus grand que la plus grande dimension de diamètre des poissons à recueillir.

3. Dispositif de transport suivant la revendication 1 ou 2, **caractérisé en ce que** l'ouverture de sortie du canal (9, 9') débouche dans une cuve collectrice, dont le niveau de l'eau se trouve au-dessus du niveau de l'eau (4) aval et en-dessous du niveau de l'eau (O) amont.

4. Dispositif de transport suivant la revendication 3, **caractérisé en ce que** le niveau de l'eau dans la cuve collectrice se trouve au-dessus du niveau de l'eau (O) amont.

5. Dispositif de transport suivant l'une des revendications 1 à 4, **caractérisé en ce que** le canal (9, 9') passe au-dessus ou traverse l'ouvrage (1) sur l'eau ou passe latéralement devant celui-ci.

6. Dispositif de transport suivant la revendication 5, **caractérisé en ce que** le diamètre intérieur du canal (9, 9') est nettement plus grand que la plus grande dimension en diamètre des poissons à recueillir.

7. Dispositif de transport suivant l'une des revendications 1 à 6, **caractérisé en ce qu'**un conduit (8) est muni en son point culminant d'une ouverture (18) de mise à l'atmosphère, qui peut être raccordée à une pompe (19).

8. Dispositif de transport suivant l'une des revendications 1 à 7, **caractérisé en ce que** les poissons refoulés dans le canal (9, 9') peuvent être transportés dans l'eau (4) aval au moyen d'un dispositif de pompage ne blessant pas les poissons.

9. Dispositif de transport suivant l'une des revendications 1 à 8, **caractérisé par** un dispositif de comptage par lequel on peut relever le nombre des poissons entrant dans le canal (9, 9') et/ou sortant du canal (9, 9') et/ou se trouvant dans la cuve collectrice.
